# EUROPÄISCHE PATENTANMELDUNG

(11) **EP 4 223 431 A1**
(43) Veröffentlichungstag der Anmeldung: **09.08.2023**
(21) Anmeldenummer: 22155515.4
(22) Anmeldetag: 08.02.2022
(51) Int. Cl.: B22C 9/06, B22D 17/22, B22D 46/00, B29C 33/04, B29C 45/73, B22F 5/00, B22F 10/00, B22F 10/20, B28B 1/00, B33Y 80/00, G05B 19/4097

(54) **HPDC TOOLS**

(71) Anmelder: GF Casting Solutions AG, 8201 Schaffhausen (CH)
(72) Erfinder: Papadimetriou, Ilias, 8236 Büttenhardt (CH)
(74) Vertreter: Fenner, Seraina

(57) **Zusammenfassung**

Verfahren zur Herstellung eines optimierten Kühlraums in einem Werkzeug bzw. Werkzeugeinsatz zum Giessen von Metallteilen mit folgenden Schritten:
• Erstellen eines dreidimensionalen Modells eines Werkzeugs bzw. Werkzeugeinsatzes,
• Auslegen eines Kühlraums im Werkzeug bzw. Werkzeugeinsatz,
• Auslegen einer Giessform entsprechend dem Werkzeug bzw. Werkzeugeinsatz,
• Erstellen eines Kerns entsprechend des ausgelegten Kühlraums,
• Erstellen der Giessform,
• Abgiessen des Werkzeugs bzw. Werkzeugeinsatzes mit in die Giessform eingelegtem Kern zum Erzeugen des Kühlraums,
• wobei eine optimierte Kontur des Kühlraums (5) mittels eines Strömungssimulationsprogramms zur Simulation der Strömung des Kühlmittels und mittels eines Wärmeübertragungssimulationstools, welche den Wärmeverlauf im Werkzeug bzw. Werkzeugeinsatz beim Giessen simuliert, ausgelegt wird.

## Beschreibung

Die Erfindung betrifft ein Verfahren zur Herstellung eines optimierten Kühlraums in einem Werkzeug bzw. Werkzeugeinsatz zum Giessen von Metallteilen mit folgenden Schritten:
- Erstellen eines dreidimensionalen Modells eines Werkzeugs bzw. Werkzeugeinsatzes,
- Auslegen eines Kühlraums im Werkzeug bzw. Werkzeugeinsatz,
- Auslegen einer Giessform entsprechend dem Werkzeug bzw. Werkzeugeinsatz,
- Erstellen eines Kerns entsprechend des ausgelegten Kühlraums,
- Erstellen der Giessform,
- Abgiessen des Werkzeugs bzw. Werkzeugeinsatzes mit in die Giessform eingelegtem Kern zum Erzeugen des Kühlraums.

Aus dem Stand der Technik sind Werkzeuge bzw. Werkzeugeinsätze für Giessverfahren im Eisenguss bekannt bei denen die Kühlung durch Kühlbohrungen umgesetzt wird. Das heisst, es werden Bohrungen im Werkzeug bzw. Werkzeugeinsatz vorgesehen, durch die das Kühlmedium während des Abgiessens strömt. Mit solchen Kühlbohrungen ist die Kühlleistung sehr beschränkt, wodurch keine optimale Kühlung des Werkzeugs bzw. Werkzeugeinsatz gegeben ist.

Die DE 20 2012 100 640 U1 offenbart ein konturbezogenes Temperierungselement in einem Werkzeug bzw. Werkzeugansatz, das in Kühlnestern anordenbar ist, wobei die Temperierungselemente im Rückraum der Kavität angeordnet sind. Hier kann zwar durch die Anordnung von Nestern an bestimmten Stellen die Kühlung erhöht werden, aber auch hier ist keine genaue Abstimmung zwischen der Kavität und den beim Giessen entstehenden Hot-Spots gegeben, wodurch das Werkzeug bzw. der Werkzeugeinsatz beim Giessen immer noch grossen Spannungen unterworfen ist.

Die DE 101 59 456 A1 offenbart ein Werkzeug bzw. einen Werkzeugeinsatz bei dem ein geschlossener Raum konturnah die Kavität hinterformt, worin ein Temperierrohr verläuft. Durch die möglichst konstante Wandstärke des Werkzeugs bzw. Werkzeugeinsatzes soll eine möglichst gleichmässige Kühlung erreicht werden.

Es ist Aufgabe der Erfindung ein Verfahren vorzuschlagen, welches die Umsetzung einer optimierten Kühlung am Werkzeug bzw. Werkzeugeinsatz vorsieht, welche Spannungen aufgrund des Wärmeverlaufs während des Giessverfahrens im Werkzeug bzw. Werkzeugeinsatz reduziert, sowie ein Werkzeug bzw. Werkzeugeinsatz mit optimierter Kühlung.

Diese Aufgabe wird erfindungsgemäss dadurch gelöst, dass eine optimierte Kontur des Kühlraums mittels eines Strömungssimulationsprogramms zur Simulation der Strömung des Kühlmittels und mittels eines Wärmeübertragungssimulationstools, welche den Wärmeverlauf im Werkzeug bzw. Werkzeugeinsatz beim Giessen simuliert, ausgelegt wird, sowie ein Werkzeug bzw. der Werkzeugeinsatz hergestellt durch das erfindungsgemässe Verfahren.

Das erfindungsgemässe Verfahren zur Herstellung eines optimierten Kühlraums in einem Werkzeug bzw. Werkzeugeinsatz zum Giessen von Metallteilen weist folgende Schritte auf:
- Erstellen eines dreidimensionalen Modells eines Werkzeugs bzw. Werkzeugeinsatzes, vorzugsweise als CAD-Modell.
- Auslegen eines Kühlraums im Werkzeug bzw. Werkzeugeinsatz, vorzugsweise wird der Kühlraum im Werkzeug bzw. Werkzeugeinsatz ebenfalls am dreidimensionalen Modell bzw. im CAD-Modell umgesetzt bzw. darin miteingezeichnet.
- Auslegen einer Giessform entsprechend dem Modell des Werkzeugs bzw. Werkzeugeinsatzes. Vorzugsweise wird diese ebenfalls als CAD-Modell modelliert.
- Erstellen eines Kerns entsprechend des ausgelegten Kühlraums. Damit der Kühlraum als Aussparung im Werkzeug bzw. Werkzeugeinsatz, welches als Gussteil ausgebildet wird, vorliegt, wird der Kühlraum als Kern hergestellt und in die Giessform zum Umgiessen und bilden der Aussparung eingelegt.
- Erstellen der Giessform, vorzugsweise durch ein additives Fertigungsverfahren. Vorzugsweise ist es auch möglich, wenn die Giessform mittels additivem Fertigungsverfahren hergestellt wird, dass der Kern direkt integriert wird und auf eine separate Kernherstellung verzichtet werden kann.
- Abgiessen des Werkzeugs bzw. Werkzeugeinsatzes mit eingelegtem Kern zum Erzeugen des Kühlraums. Selbstverständlich können auch mehrere Kerne in die Giessform eingelegt werden um den gewünschten Kühlraum im Werkzeug bzw. Werkzeugeinsatz zu erzielen.
- Der Kühlraum weist eine optimierte Kontur auf, die mittels eines Strömungssimulationsprogramms zur Simulation der Strömung des Kühlmittels und mittels eines Wärmeübertragungssimulationstools, welche den Wärmeverlauf im Werkzeug bzw. Werkzeugeinsatz beim Giessen simuliert, ausgelegt wird.

Die Auslegung des Werkzeugs bzw. Werkzeugeinsatzes erfolgt vorzugsweise in einem dreidimensionalen Modell und basiert vorzugsweise auf das CAD-Modell. Vorzugsweise kann dazu das erstellte CAD-Modells des Werkzeugs bzw. Werkzeugeinsatzes in das Strömungssimulationsprogramm sowie in das Wärmeübertragungssimulationstool importiert werden, welches dann mit weiteren Randbedingungen die optimierte Kontur des Kühlraums errechnet. Randbedingungen, die zur optimierten Kontur des Kühlraums dienen können sein, das Kühlmedium und dessen Strömungsgeschwindigkeit und Eigenschaften sowie der Volumenstrom, wie aber auch die Wärmeentwicklung am Werkzeug bzw. Werkzeugeinsatz aufgrund des einströmenden flüssigen Metalls.

Das Strömungssimulationsprogramm dient dazu die Strömung des Kühlmittels im Werkzeug bzw. Werkzeugeinsatz zu simulieren, vorzugsweise die Strömung im Kühlraum des Werkzeugs bzw. Werkzeugeinsatzes. Durch die entsprechend optimierte Kontur bzw. einen optimierten Verlauf des Kühlraums, kann beispielsweise erreicht werden, dass an Stellen wo das Werkzeug bzw. der Werkzeugeinsatz sehr heiss wird, eine höhere Strömung des Kühlmediums erzielt wird, um die Wärme besser abzuleiten. Analog dazu evaluiert das Wärmeübertragungstool die auftretenden Temperaturen am Werkzeug bzw. Werkzeugeinsatz während eines Abgiessvorgangs eines gewünschten Metallteils vorzugsweise Leichtmetalldruckgussteils. Durch diese Art der Auslegung und Herstellung des erfindungsgemässen Werkzeugs bzw. Werkzeugeinsatzes sind gegenüber den aus dem Stand der Technik bekannten Kühlbohrungen viel mehr Freiheitsgrade im Verlauf der Kontur des Kühlraums möglich was ein optimales Zuführen des Kühlmediums an Stellen ermöglicht, die mit Bohrungen kaum erreichbar sind oder aber so hohe Temperaturen aufweisen, dass Bohrungen für eine optimale Kühlung nicht ausreichen.

Gemäss einer bevorzugten Ausführungsform wird ein dreidimensionales Modell eines Werkzeugs bzw. Werkzeugeinsatzes als CAD-Modell erstellt. Wie bereits erwähnt ist es vorteilhaft, wenn dieses als Ausgangsbasis zum Auslegen des Kühlraums dient und mit Hilfe des Strömungssimulationsprogramms und des Wärmeübertragungstools dieser dann direkt darin ausgelegt werden kann.

Vorzugsweise wird die Giessform des Werkzeugs bzw. Werkzeugeinsatzes durch ein additives Fertigungsverfahren hergestellt. Die Giessform basiert vorzugsweise auf ein ausgelegtes und erstellten CAD-Modell. Durch die Additivfertigung der Giessform ist eine rasche und gesamtheitlich betrachtet kostengünstige Herstellung möglich.

Als vorteilhaft hat sich gezeigt, wenn das Werkzeug bzw. der Werkzeugeinsatz als Eisengussbauteil abgegossen wird. Diese als Druckgusswerkzeuge eingesetzten Eisengussbauteile halten Druck und Temperaturen für die Fertigung von Druckgusswerkzeugen stand.

Bevorzugterweise wird das Werkzeug bzw. der Werkzeugeinsatz als GJS-, GJL-, oder Stahlgussbauteil abgegossen. Diese Werkstoffe eignen sich aufgrund ihrer hohen Festigkeit gut für den Einsatz in einem Druckgusswerkzeug zudem ermöglichen sie eine wirtschaftliche Herstellung von Werkzeugen.

Der Kern wird in der Giessform derart angeordnet, dass er nahezu vollständig vom Gussmaterial umgeben wird. Aufgrund dessen ist es vorteilhaft, wenn der Kern aus einem Material mit guten Zerfallseigenschaften hergestellt ist. Nach dem Abgiessen des Werkzeugs bzw. Werkzeugeinsatzes muss der Kern, welcher den Hohlraum für den Kühlraum bildet aus dem gegossenen Werkzeug bzw. Werkzeugeinsatzes entfernt werden. Da der Kühlraum vorzugsweise als ein geschlossener Raum mit nur wenigen Ein- und Ausgängen ausgebildet ist, ist es von Vorteil, wenn sich das Kernmaterial wieder in seine ursprüngliche Struktur zersetzen lässt und beispielsweise aus dem gegossenen Werkzeug bzw. Werkzeugeinsatz herausgeschüttelt werden kann. Vorzugsweise weist das Werkzeug bzw. Werkzeugeinsatz mindestens einen Ein- und einen Ausgang zum Kühlraum auf der dem Durchströmen des Kühlmediums dient.

Vorzugsweise wird der Kern durch ein additives Fertigungsverfahren hergestellt, was eine schnelle und kostengünstige Lösung darstellt. Als besonders bevorzugt hat sich gezeigt, wenn der Kern als Sandkern hergestellt wird.

Als bevorzugte Ausführungsform des erfindungsgemässen Verfahrens hat sich gezeigt, wenn die Aussenkontur des gegossenen Werkezeugs bzw. Werkzeugeinsatzes keiner materialabtragenden Nachbearbeitung unterzogen wird. Das heisst also, die gegossene Kontur ist die Abschlusskontur und aufgrund ihrer Masshaltigkeit direkt einsetzbar.

Ebenso als bevorzugte Ausführungsform hat sich gezeigt, wenn die Oberfläche des gegossenen Werkzeugs bzw. Werkzeugeinsatzes beschichtet wird. Dies erhöht die Standzeit des Werkzeugs bzw. Werkzeugeinsatzes und senkt je nach vorgesehener Laufzeit bzw. Einsatzzeit des Werkzeugs bzw. Werkzeugeinsatzes die Gesamt-Produktionskosten.

Das erfindungsgemässe Werkzeug bzw. Werkzeugeinsatze ist gemäss dem Verfahren als Druckgusswerkzeug bzw. Druckgusswerkzeugeinsatz ausgebildet.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Darstellung einer Werkzeughälfte mit den darin angeordneten Werkzeugeinsätzen,
- Fig. 2: eine dreidimensionale Darstellung eines Modells des Werkzeugeinsatzes,
- Fig. 3: eine dreidimensionale Darstellung eines Kerns zur Bildung des Kühlraums und
- Fig. 4: eine dreidimensionale Schnittdarstellung eines gegossenen Werkzeugeinsatzes.

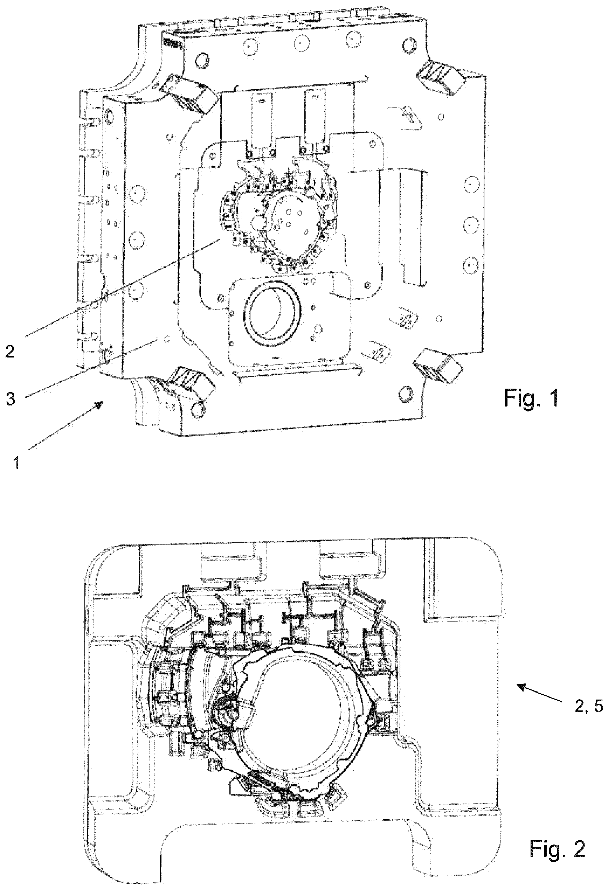

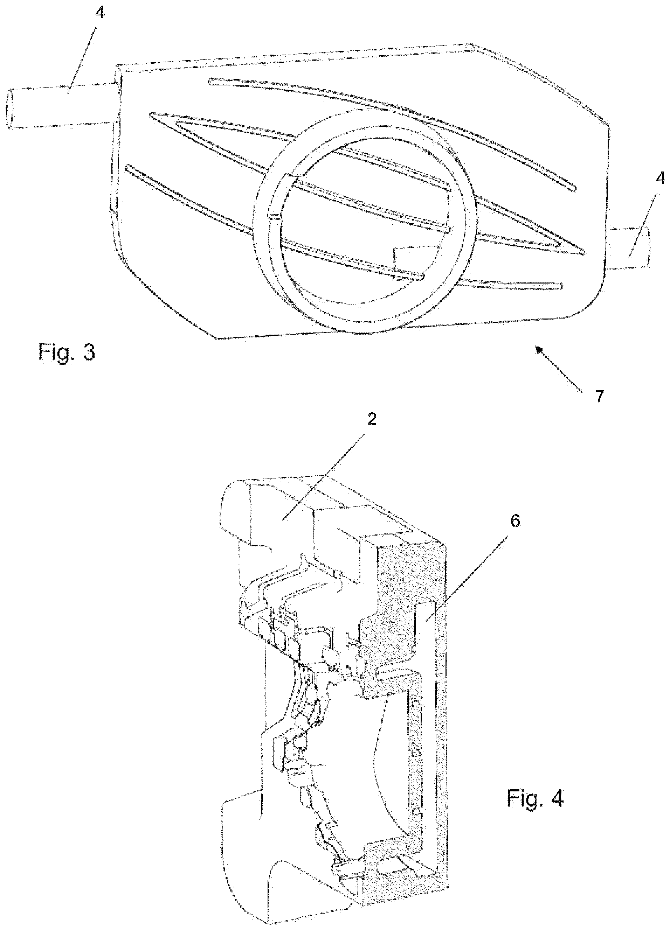

Die in Fig. 1 dargestellte Zeichnung zeigt eine Werkzeughälfte 1 in der die erfindungsgemässen Werkzeugeinsätze 2 angeordnet sind. Die abgebildete Werkzeughälfte 1 stellt ein grosses Druckgusswerkzeug dar, weshalb das Werkzeug einen Werkzeugrahmen 3 aufweist in dem Werkzeugeinsätze 2 und Schieber 4 angeordnet sind. Bei kleineren Werkzeugen ist ein Rahmen nicht nötig und die Werkzeugeinsätze 2 sind direkt als Werkzeug ausgebildet, weshalb die vorliegende Erfindung auf Werkzeuge und Werkzeugeinsätze anwendbar ist. Die Werkzeughälfte 1 zeigt, dass mehrere Werkzeugeinsätze 2 wie auch Schieber 4 in einem Werkzeug angeordnet sein können, diese sind entsprechend dem abzugiessenden Druckgussteil ausgebildet. In Fig. 2 ist ein Modell 5 eines Werkzeugeinsatzes 2 bzw. Werkzeugs, wenn es sich um kleinere Gussteile ohne Werkzeugrahmen 3 handelt, dargestellt. Zur Erstellung dieses Modells wird gemäss dem erfindungsgemässen Verfahren ein dreidimensionales Modell des Werkzeugs bzw. Werkzeugeinsatzes 2 erstellt, vorzugsweise als CAD-Modell. Dementsprechend kann dann ein Modell 5 erstellt werden, das vorzugsweis im Additivverfahren hergestellt wird. Für den Werkzeugeinsatz 2 bzw. Werkzeug wird ein Kühlraum 6 ausgelegt, wobei das Auslegen des Kühlraums 6 digital erfolgt und an das dreidimensionale Modell des Werkzeugeinsatzes 2 bzw. Werkzeugs angepasst wird. Aufgrund des ausgelegten Kühlraums 6, der mithilfe eines Strömungssimulationsprogramms und eines Wärmeübertragungssimulationstools ausgelegt wird, wird dann ein Kern 7 erstellt, der in Fig. 3 mit einer beispielhaften Kontur abgebildet ist. Der Kern 7 wird vorzugsweise durch ein Additivverfahren bzw. 3D-Druckverfahren hergestellt und ist vorzugsweise als Sandgusskern ausgebildet. In Fig. 3 zeigt der Kern 6 auch noch die Zuführleitungen 4 bzw. die negative Form derer, welche dann die Zu-und Ableitung zum Kühlraum bildet. Der Kern 7 wird dann zum Abgiessen in eine Giessform eingelegt, wobei die Innenkontur der Giessform aufgrund des Modells 5 des Werkzeugs bzw. Werkzeugeinsatzes erstellt wurde. Nach dem Giessen zerfällt der Kern 7 in seine Ausgangsstruktur und ist aus dem Werkzeugeinsatz 2 herausschüttelbar. In Fig. 4 ist der Kühlraum 6 in der Schnittansicht des abgegossenen Werkzeugeinsatzes 2 ersichtlich, der aufgrund des Kerns 7 erstellt wurde. Gut zu erkennen ist die optimierte Kontur des Kühlraums 6, welche nahe an der Aussenkontur des Werkzeugeinsatzes 2 verläuft und dadurch die Wandstärken derart reduziert, dass eine optimierte Kühlung erfolgen kann. Zudem ist durch diese Ausbildung des Kühlraums 6 gegeben, dass auch an kaum zugänglichen Stellen eine Kühlung stattfinden kann, da dem Verlauf des Kühlraums 6 alle Freiheitsgrade bei der Auslegung offenstehen.

### Bezugszeichenliste

- 1: Werkzeughälfte
- 2: Werkzeugeinsatz
- 3: Werkzeugrahmen
- 4: Negativ der Zu-und Ableitung
- 5: Modell
- 6: Kühlraum
- 7: Kern

## Patentansprüche

1. Verfahren zur Herstellung eines optimierten Kühlraums (5) in einem Werkzeug bzw. Werkzeugeinsatz (2) zum Giessen von Metallteilen mit folgenden Schritten:
• Erstellen eines dreidimensionalen Modells eines Werkzeugs bzw. Werkzeugeinsatzes (2),
• Auslegen eines Kühlraums (5) im Werkzeug bzw. Werkzeugeinsatz (2),
• Auslegen einer Giessform entsprechend dem Werkzeug bzw. Werkzeugeinsatz (2),
• Erstellen eines Kerns (6) entsprechend des ausgelegten Kühlraums,
• Erstellen der Giessform,
• Abgiessen des Werkzeugs bzw. Werkzeugeinsatzes (2) mit in die Giessform eingelegtem Kern (6) zum Erzeugen des Kühlraums (5),
• **dadurch gekennzeichnet, dass** eine optimierte Kontur des Kühlraums (5) mittels eines Strömungssimulationsprogramms zur Simulation der Strömung des Kühlmittels und mittels eines Wärmeübertragungssimulationstools, welche den Wärmeverlauf im Werkzeug bzw. Werkzeugeinsatz (2) beim Giessen simuliert, ausgelegt wird.

2. Verfahren gemäss Anspruch 1, **dadurch gekennzeichnet, dass** das dreidimensionalen Modell des Werkzeugs bzw. Werkzeugeinsatzes (2) als CAD-Modell erstellt wird.

3. Verfahren gemäss einem der Ansprüche 1 oder 2, **dadurch gekennzeichnet, dass** die Giessform zur Erstellung des Werkzeugs bzw. Werkzeugeinsatzes (2) mittels eines additiven Fertigungsverfahrens hergestellt wird.

4. Verfahren gemäss einem der Ansprüche 1 bis 3, **dadurch gekennzeichnet, dass** das Werkzeug bzw. der Werkzeugeinsatz (2) als Eisengussbauteil abgegossen wird.

5. Verfahren gemäss einem der Ansprüche 1 bis 4, **dadurch gekennzeichnet, dass** das Werkzeug bzw. der Werkzeugeinsatz (2) als GJS-, GJL-, oder Stahlgussbauteil abgegossen wird.

6. Verfahren gemäss einem der Ansprüche 1 bis 5, **dadurch gekennzeichnet, dass** der Kern (6) aus einem Material hergestellt wird das gute Zerfallseigenschaften aufweist und in seine ursprüngliche Struktur zersetzbar ist.

7. Verfahren gemäss einem der Ansprüche 1 bis 6, **dadurch gekennzeichnet, dass** der Kern (6) durch ein additives Fertigungsverfahren hergestellt wird.

8. Verfahren gemäss einem der Ansprüche 1 bis 7, **dadurch gekennzeichnet, dass** die Aussenkontur des gegossenen Werkezeugs bzw. Werkzeugeinsatzes (2) keiner materialabtragenden Nachbearbeitung unterzogen wird.

9. Verfahren gemäss einem der Ansprüche 1 bis 8, **dadurch gekennzeichnet, dass** die Oberfläche des gegossenen Werkzeugs bzw. Werkzeugeinsatzes (2) beschichtet wird.

10. Werkzeug bzw. Werkzeugeinsatz (2) hergestellt nach den Verfahren gemäss einem der Ansprüche 1 bis 9, **dadurch gekennzeichnet, dass** das Werkzeug bzw. der Werkzeugeinsatz (2) als Druckgusswerkzeug bzw. Druckgusswerkzeugeinsatz ausgebildet ist.
